# FASCICULE DE BREVET EUROPEEN

(11) **EP 4 139 077 B1**
(45) Date de publication et mention de la délivrance du brevet: **14.08.2024**
(21) Numéro de dépôt: 21718099.1
(22) Date de dépôt: 09.04.2021
(51) Int. Cl.: B23K 9/02, B23K 9/16, B23K 26/24, B23K 31/00, B23K 31/12, G06N 3/04

(54) **PROCEDE, DISPOSITIF ET PROGRAMME D'ORDINATEUR POUR DETERMINER LA PERFORMANCE D'UN PROCEDE DE SOUDAGE A L'AIDE DE TRAITEMENTS NUMERIQUES D'UNE IMAGE DE LA PIECE SOUDEE**
VERFAHREN, VORRICHTUNG UND COMPUTERPROGRAMM ZUR BESTIMMUNG DER DURCHFÜHRUNG EINES SCHWEISSVERFAHRENS DURCH DIGITALE BEARBEITUNG EINES BILDES DES GESCHWEISSTEN WERKSTÜCKS
METHOD, DEVICE AND COMPUTER PROGRAM FOR DETERMINING THE PERFORMANCE OF A WELDING METHOD VIA DIGITAL PROCESSING OF AN IMAGE OF THE WELDED WORKPIECE

(30) Priorité: 20.04.2020 FR 2003950
(43) Date de publication de la demande: 01.03.2023
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: CARISTAN, Charles L, Newark, Delaware 19702 (US); PLANCKAERT, Jean-Pierre, Newark, Delaware 19702 (US)
(74) Mandataire: Air Liquide
(86) Numéro de dépôt international: PCT/EP2021/059303
(87) Numéro de publication internationale: WO 2021/213817

(56) Documents cités:
- WO-A1-2019/103772
- CN-A- 109 332 928
- DE-A1- 102008 062 866
- JP-A- 2019 188 421
- US-A1- 2012 152 916

## Description

La présente invention concerne un procédé de détermination de la performance d'un procédé de soudage réalisé sur au moins une pièce métallique, notamment un procédé de soudage à l'arc électrique ou de soudage laser, ainsi qu'un dispositif apte et destiné à la mise en oeuvre dudit procédé conformément au préambule des revendications 1 et 14 (voir par exemple DE 10 2008 062866 A1), et aussi un produit programme d'ordinateur, voir revendication 15.

Il est connu que la présence de projections de métal fondu à la surface d'un assemblage soudé est un indicateur de l'efficacité du procédé de soudage et de la qualité de la soudure résultante. C'est le cas notamment en soudage à l'arc, en particulier en soudage MIG, pour « Métal Inert Gas », ou MAG, pour « Métal Active Gas ». Ces procédés utilisent un arc électrique établi entre l'extrémité d'un fil métallique fusible et les pièces métalliques à souder pour fondre le métal constitutif des pièces à souder ainsi que le métal constitutif du fil fusible, i. e le métal d'apport, ce qui génère un bain de métal liquide formé du métal des pièces à souder et du métal du fil fusible fondu et transféré dans l'arc électrique.

Afin de contrôler le détachement de la goutte au bout du fil et son transfert vers le bain fondu, on utilisent des générateurs de courant électroniques dans lesquels les paramètres opératoires de soudage, notamment intensité du courant, tension d'arc, vitesse de fil, ... sont programmés pour évoluer d'une manière prédéfinie, ce qui permet de travailler dans un régime de transfert adapté au procédé de soudage à mettre en oeuvre. Un mauvais paramétrage peut conduire à un régime de transfert instable se traduisant par la génération de nombreuses projections de métal fondu.

De même en soudage laser, que le soudage soit autogène ou avec apport de matière, on peut corréler la qualité et la productivité du procédé à la quantité de projections métalliques. En effet, lors du soudage, un orifice de pénétration et un bain de métal en fusion se forment dans la zone irradiée avec le faisceau laser. Du métal liquide est repoussé vers le haut. En cas d'instabilité de ce liquide au sommet du capillaire de soudage (keyhole en anglais), de la matière est éjectée de la zone de soudage créant des projections sur et autour de la soudure qui ont pour conséquences des surépaisseurs et des manques de matière sur le cordon de soudure.

Les projections indiquent une baisse de productivité engendrée par la perte de métal d'apport, de la baisse de puissance et/ou de vitesse de soudage qu'elles imposent et du temps supplémentaire de nettoyage des pièces soudées.

Il existe différentes techniques pour caractériser les projections générées au cours d'un procédé de soudage. Ces techniques reposent le plus souvent sur une observation en temps réel, c'est-à-dire pendant que le soudage est réalisé, des projections générées au cours du soudage. Par exemple, on peut utiliser des enregistrements réalisés au moyen d'une caméra rapide pour suivre les trajectoires des projections et les comptabiliser.

On connaît ainsi des documents US20120152916A et CN109332928A des dispositifs de détermination de la qualité de soudage qui effectue un comptage des projections sur une image enregistrée pendant le soudage par une caméra rapide.

Par ailleurs, on connaît de WO2019103772A1 une méthode de détection et de prédiction de défauts de soudage utilisant des résultats de simulations de soudage et des réseaux neuronaux.

On connaît également des techniques reposant sur l'analyse d'enregistrements sonores réalisés au cours du soudage.

La plupart des techniques existantes reposent donc sur une analyse dynamique des projections et nécessitent des équipements relativement complexes qui doivent être installées sur le lieu de soudage, ce qui peut s'avérer prohibitif pour des installations de production à échelle industrielle et encore plus pour des petites structures dont les capacités d'investissement sont moindres. En outre, cela implique l'utilisation de logiciels très complexes conduisant à un coût élevé pour l'installation finale.

Le problème à résoudre est dès lors de proposer un procédé de détermination de la performance d'un procédé de soudage qui soit de mise en oeuvre relativement simple et offre une plus grande flexibilité d'utilisation que dans l'art antérieur.

La solution selon l'invention est alors un procédé de détermination de la performance d'un procédé de soudage réalisé sur au moins une pièce métallique teel que défini dans la revendication 1.

Selon le cas, l'invention peut comprendre l'une ou plusieurs des caractéristiques suivantes :
- le dispositif de prise d'image est agencé dans un système informatique choisi parmi : un téléphone intelligent, une tablette, un ordinateur portable.
- le procédé comprend, préalablement à l'étape a), une étape de calibration du dispositif de prise d'image comprenant l'acquisition de plusieurs images d'un même motif bidimensionnel avec le dispositif de prise d'image positionné pour chaque image à une distance prédéterminée distincte du motif bidimensionnel, ledit motif étant ensuite positionné sur ladite au moins une portion de surface de la pièce de façon à être inclus dans l'image initiale acquise à l'étape a).
- le procédé met en oeuvre au moins un traitement statistique relatif audit au moins un paramètre représentatif de la performance de soudage, notamment un traitement statistique relatif à la surface des projections confirmées comprenant la détermination d'au moins l'une parmi : la surface moyenne des projections confirmées, la surface minimale et/ou la surface maximale des projections confirmées, la déviation standard de la surface des projections confirmées, au moins une population en nombre de projections confirmées ayant une surface supérieure à un seuil bas prédéterminé et/ou inférieure à un seuil haut prédéterminé.
- on acquiert plusieurs images initiales à des temps successifs et on compare les valeurs du paramètre représentatif de la quantité de projections confirmées déterminé pour chacune des images initiales afin de détecter une éventuelle variation dudit paramètre.
- ladite au moins une image initiale est acquise avec le dispositif de prise d'image positionné à une distance comprise entre 10 et 40 cm, de préférence entre 20 et 30 cm, au-dessus de la soudure.
- le premier traitement numérique réalisé à l'étape b) sur l'image initiale comprend les sous-étapes suivantes : i) filtrage de l'image initiale de façon à opérer une différenciation entre les projections métalliques et un arrière-plan de l'image initiale, ii) suppression de l'arrière-plan de l'image initiale, iii) binarisation de l'image filtrée issue de l'étape i), notamment par seuillage basé sur l'intensité, de façon à former une image binaire à deux valeurs de pixels, avec, optionnellement, inversion des valeurs des pixels de l'image binaire, iv) sélection d'une des deux valeurs de pixels de façon à définir dans l'image binaire des zones d'intérêt formées par les pixels de la valeur sélectionnée, avec, optionnellement, dilatation desdites zones d'intérêt, v) marquage des zones d'intérêt sur l'image binaire et transposition dudit marquage sur l'image initiale de façon à y localiser des projections présumées.
- préalablement à l'étape c), on attribue une position à chacune des projections présumées localisées à l'étape b), notamment une position définie par des coordonnées bidimensionnelles, et on compare deux à deux chacune desdites positions, une des deux projections présumées étant ignorée lorsque la distance entre les positions comparées est inférieure à une valeur prédéterminée.
- à l'étape c), le réseau neuronal comporte plusieurs couches de convolution, de préférence trois couches de convolution, au moins une couche entièrement connectée et au moins une couche de regroupement, de préférence une couche de regroupement est intercalée entre deux couches de convolution.
- à l'étape c), les projections présumées sont classées en projections confirmées ou non-confirmées selon des critères de décision définis par un apprentissage préalable du réseau neuronal, ledit apprentissage étant réalisé au moyen d'un ensemble d'images d'apprentissage comprenant plusieurs sous-ensembles choisis parmi : un sous-ensemble d'images d'apprentissage comprenant chacune au moins une projection métallique, un sous-ensemble d'images d'apprentissage exemptes de projections métalliques, un sous-ensemble d'images d'apprentissage comprenant chacune au moins un défaut autre qu'une projection tel une rayure, une réflexion parasite, un sous-ensemble d'images d'apprentissage comprenant chacune au moins une portion de soudure, lesdits sous-ensembles comprenant de préférence chacun au moins 1000 images d'apprentissage, de préférence encore au moins 2000 images d'apprentissage.
- à l'étape c), on associe aux extraits de l'image initiale en entrée du réseau neuronal au moins une information de contexte choisie parmi : le matériau de la pièce métallique, le gaz de soudage, la configuration de joint soudé, le régime de transfert de métal, la tension du courant de soudage, l'intensité du courant de soudage, la vitesse de dévidage de fil.
- le procédé comprend, préalablement à l'étape b), une étape de pré-traitement de l'image initiale par application d'au moins un masque configuré pour supprimer de l'image initiale des caractéristiques autres que des projections, par exemple des rayures, des réflexions parasites.
- le procédé comprend une étape de transmission à distance de l'image initiale via un réseau de communication, de préférence un réseau de type Internet, du dispositif de prise d'image vers un serveur distant, les étapes b) à e) étant réalisée par un système électronique de traitement localisée dans le serveur distant.

En outre, l'invention concerne un dispositif de détermination de la performance d'un procédé de soudage tel que défini dans la revendication 14.

Selon un autre aspect, l'invention a trait à un produit programme d'ordinateur téléchargeable depuis un réseau de communication et/ou enregistré sur un support lisible par ordinateur et/ou exécutable par un processeur tel que défini dans la revendication 15.

L'invention va maintenant être mieux comprise grâce à la description détaillée suivante faite en référence aux figures annexées parmi lesquelles :
Fig. 1 schématise une étape d'acquisition d'une image initiale selon un mode de réalisation de l'invention,
Fig. 2 schématise des étapes du procédé selon un mode de réalisation de l'invention,
Fig. 3 représente des étapes d'un premier traitement numérique d'image selon un mode de réalisation de l'invention,
Fig. 4 représente des étapes d'un premier traitement numérique d'image selon un autre mode de réalisation de l'invention,
Fig. 5 représente des étapes de traitement d'un extrait de l'image initiale par un réseau neuronal selon un mode de réalisation de l'invention,
Fig. 6 représente un apprentissage du réseau neuronal selon un mode de réalisation de l'invention,
Fig. 7 montre des exemples d'images initiales sur lesquelles sont localisées des projections confirmées.

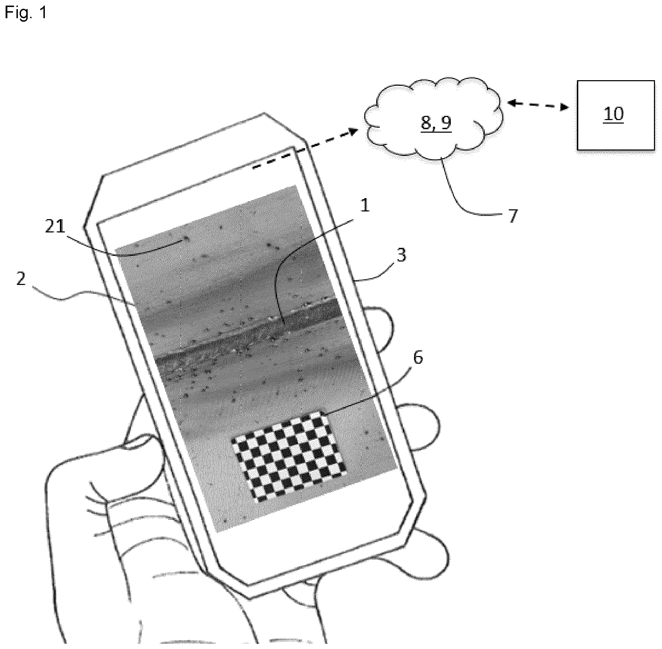

La Figure 1 illustre l'acquisition d'une image initiale 2 d'une portion de surface de pièces métalliques soudées l'une à l'autre au niveau d'une soudure 1. Selon l'invention, on acquiert l'image initiale 2 une fois le soudage des pièces terminé, c'est-à-dire après l'obtention d'un cordon de soudure 1 correspondant à la zone de resolidification du métal constitutif des pièces soudées et du métal d'apport le cas échéant. Dit autrement, on réalise d'abord le soudage de ladite au moins une pièce et, seulement après que le soudage a été terminé, on acquiert l'image initiale 2. Les projections s'entendent donc des projections présentes à la surface des pièces.

Contrairement aux techniques où l'observation des projections est effectuée en temps réel, c'est-à-dire pendant que le soudage est réalisé, l'invention met en oeuvre une analyse d'une image des projections situées sur la surface de la pièce après que celle-ci ait terminé d'être soudée. Cela nécessite des équipements d'analyse, notamment dispositif de prise d'image, logiciels, ... moins complexes. L'analyse de l'image est réalisée a posteriori, ce qui évite de devoir installer les dispositifs d'acquisition et de traitement d'image sur le lieu de soudage, dont les capacités d'investissement sont moindres. En outre, cela implique l'utilisation de logiciels très complexes conduisant à un coût élevé pour l'installation finale. Le procédé selon l'invention est ainsi de mise en oeuvre plus simple et plus flexible. En particulier, des dispositifs de prise d'image plus simple qu'une caméra rapide peuvent être utilisés.

De préférence, le dispositif de prise d'image 3 est un téléphone intelligent, ou « smartphone » en langue anglaise, étant entendu que d'autres types de systèmes informatiques portables sont envisageables tels une tablette, un ordinateur portable, une montre connectée.

De préférence, l'image initiale 2 est acquise avec le dispositif de prise d'image 3 positionné à une distance comprise entre 10 et 40 cm, de préférence entre 20 et 30 cm, au-dessus de la soudure 1. La distance de prise d'image est définie par un compromis entre résolution de l'image 2 et taille de la portion de surface analysée. Notons que la distance de prise d'image correspond à la distance entre l'objectif du dispositif et la surface de la pièce.

Avantageusement, on réalise, préalablement à l'acquisition de l'image initiale 2, une calibration du dispositif de prise d'image 3 utilisant au moins une image d'un même motif bidimensionnel 6 prise avec le dispositif de prise d'image 3. Le motif 6 présente des dimensions réelles connues et est placé à une distance prédéterminée connue du dispositif 3, ce qui permet d'associer à un pixel une dimension réelle.

De préférence, on utilise plusieurs images d'un même motif bidimensionnel 6 prises avec le dispositif de prise d'image 3. Pour chaque image, le motif 6 est positionné à une distance prédéterminée distincte du dispositif 3. Ce motif 6 comprend des éléments caractéristiques de dimensions connues, par exemple un quadrillage régulier à deux valeurs de pixels. On utilise de préférence au moins 2, voire au moins 5 images du motifs 6 prises à des distances différentes, ceci afin d'éviter toute erreur de calibration. A l'étape a), le motif 6 est positionné sur la portion de surface de pièce de façon à être inclus dans l'image initiale 2.

Grâce à la calibration, il est possible de corréler les dimensions des pixels de l'image initiale aux dimensions réelles afin de calculer les dimensions réelles des projections, sans qu'il ne soit nécessaire de contrôler précisément la distance de prise d'image, ce qui est utile notamment dans le cas où le dispositif 3 est dans un téléphone tenu par un opérateur.

On réalise ensuite un premier traitement numérique sur l'image initiale 2 de manière à localiser dans l'image initiale 2 des projections présumées 21.

Ces projections sont dites présumées car des défauts présents à la surface des pièces, par exemple des rayures, des réflexions parasites, peuvent être confondus avec des projections lors du premier traitement d'image.

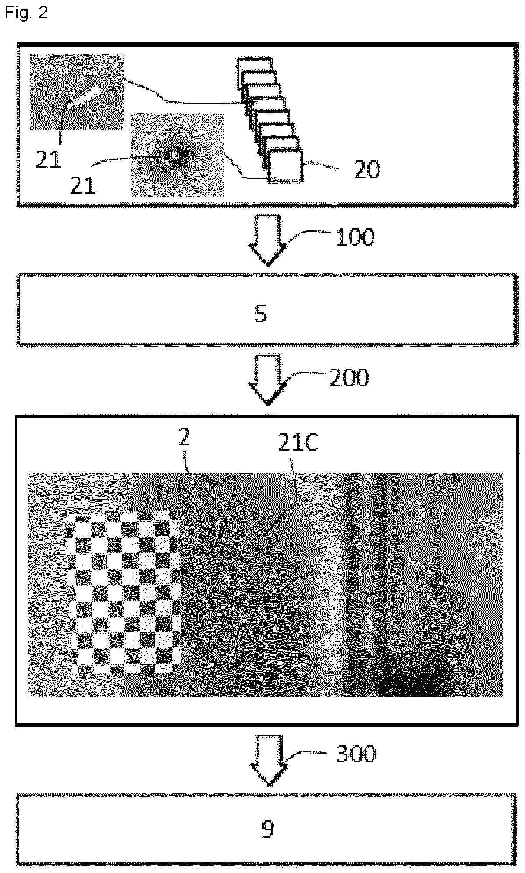

On peut voir sur la Figure 2 un schéma des étapes du procédé selon un mode de réalisation de l'invention. Afin de différentier les projections se trouvant sur les pièces d'autres imperfections, le procédé selon l'invention utilise au moins un réseau neuronal 5, en particulier un réseau neuronal à convolution, recevant, en 100, comme données d'entrée un ou plusieurs extraits 20 de l'image initiale 2 comprenant chacun une projection présumée 21. De préférence, chaque extrait 20 ne comporte qu'une seule projection. Le réseau neuronal 5 est configuré pour réaliser une classification, en 200, des projections présumées de chaque extrait 20 en projections confirmées 21C ou non-confirmées 21N. De préférence, le réseau neuronal fonctionne sur plusieurs extraits 20 entrés successivement dans le réseau.

De façon connue, les réseaux neuronaux artificiels constituent des modèles de calculs imitant le fonctionnement des réseaux de neurones biologiques. Les réseaux de neurones artificiels comprennent des neurones interconnectés entre eux par des synapses, qui sont classiquement implémentées par des mémoires numériques. Les synapses peuvent être également implémentées par des composants résistifs dont la conductance varie en fonction de la tension appliquée à leurs bornes.

Les réseaux neuronaux à convolution sont un modèle particulier de réseau de neuronaux artificiels. Ils ont été décrits initialement dans l'article de K. Fukushima, « Neocognitron: A self-organizing neural network model for a mechanism of pattern récognition unaffected by shift in position. Biological Cybernetics, 36(4): 193-202, 1980. ISSN 0340-1200. doi: 10.1007/BF00344251 ».

Les réseaux neuronaux à convolution (désignés en langue anglo-saxonne par les expressions "convolutional neural networks", ou "deep (convolutional) neural networks" ou encore "ConvNets") sont des réseaux de neurones sans rétro-action (« feedforward »), inspirés par les systèmes visuels biologiques.

Les réseaux neuronaux à convolution (CNN) sont utilisés notamment dans des systèmes de classifications d'images pour accélérer la classification. Appliqués à la reconnaissance d'images, ces réseaux permettent un classement des représentations intermédiaires d'objets dans les images qui sont plus petites et généralisables pour des objets similaires, ce qui facilite leur reconnaissance.

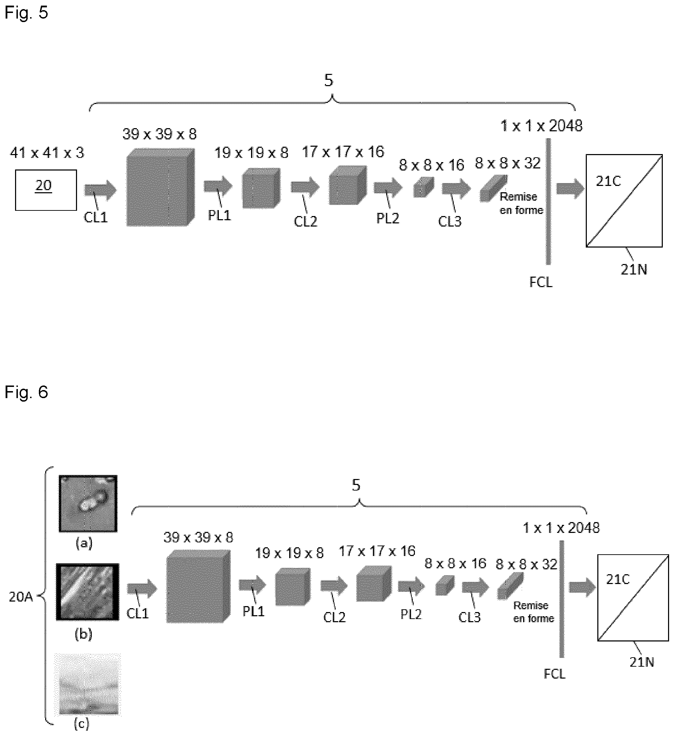

De préférence, les projections présumées sont classées en projections confirmées ou non-confirmées selon des critères de décision définis par un apprentissage, i. e. un entraînement, préalable du réseau neuronal 5. Lors de cet apprentissage, dont un exemple est schématisé en figure 6, on apprend au réseau neuronal à catégoriser automatiquement un extrait d'image parmi un nombre fini de catégories, aussi appelées classes. Dans le cas de la présente invention, la classification a lieu selon au moins deux classes, une classe « projection confirmée » 21C et une classe « projection non-confirmée » 21N couvrant les occurrences sur l'image 2 autres que des projections. La classe « projection non-confirmée » peut éventuellement être affinée en plusieurs sous-classes, par exemple une sous-classe « rayure », une sous-classe « réflexion », une sous-classe « ombre », ...

L'apprentissage est réalisé au moyen d'un ensemble d'images d'apprentissage 20A qui comprennent plusieurs exemples de chaque classe ou sous-classe, comme illustré sur la Figure 6. Ainsi, les images d'apprentissage comprennent plusieurs sous-ensembles choisis parmi : un sous-ensemble d'images d'apprentissage comprenant chacune au moins une projection métallique, en (a), un sous-ensemble d'images d'apprentissage exemptes de projections métalliques, un sous-ensemble d'images d'apprentissage comprenant chacune au moins un défaut autre qu'une projection tel une rayure, en (b), une réflexion parasite, un sous-ensemble d'images d'apprentissage comprenant chacune au moins une portion de soudure, en (c), lesdits sous-ensembles comprenant de préférence chacun au moins 1000 images d'apprentissage, de préférence encore au moins 2000 images d'apprentissage.

De préférence, les images d'apprentissage comprennent chacune au moins une portion de surface d'un échantillon déjà soudé. Les échantillons comprennent différents types de soudure obtenus par différents procédés, notamment soudage à l'arc, en particulier MIG ou MAG, soudage laser, soudage hybride laser-arc, ... et selon différentes configurations de soudage, notamment en bord à bord, en angle, ... afin d'entraîner le réseau neuronal de la façon la plus exhaustive possible et qu'il puisse identifier des projections sur la plupart des soudures réalisées au niveau industriel.

Après le classement des projections, on réalise un deuxième traitement numérique sur l'image initiale 2 sur laquelle ont été localisées les projections 21C confirmées. Le deuxième traitement numérique est configuré pour déterminer à partir de l'image initiale 2 au moins un paramètre représentatif de la quantité de projections confirmées choisi parmi la surface d'une ou plusieurs projections confirmées 21C, la surface totale des projections confirmées 21C, définie comme la somme de la surface de chaque projection confirmée 21C, le nombre de projections confirmées 21C, le nombre de projections confirmées 21C par unité de surface, le poids total des projections confirmées 21C, la densité des projections, définie comme la surface totale des projections confirmées 21C divisée par la surface totale S₂ de l'image initiale 2, la moyenne des distances entre chaque projection confirmée 21C et le cordon de soudure 1.

De préférence, S₂ est la surface totale réelle de l'image initiale 2 acquise à l'étape a), pouvant s'exprimer en cm² ou mm².

De préférence, en considérant un cordon de soudure 1 s'étendant suivant un axe longitudinal parallèle à la direction de soudage et positionné au centre du cordon, la distance entre une projection et le cordon est définie comme la distance la plus courte séparant ladite projection de l'axe longitudinal.

La performance du procédé de soudage est déterminée à partir du au moins un paramètre représentatif de la quantité de projections confirmées.

Notons que la performance du procédé de soudage peut s'évaluer en termes de critères de qualité du cordon de soudure résultant du procédé, notamment de considérations morphologiques telles que l'aspect de surface du cordon et/ou de la surface de la pièce autour du cordon, la profondeur de pénétration et/ou en termes de critères d'efficacité de soudage telles que la vitesse de soudage, le bon ajustement des paramètres opératoires de soudage, le taux de dépôt, exprimé en masse de métal fondu resolidifié par unité de temps (kg/heure), le taux de production, exprimé en masse de métal fondu resolidifié par unité de longueur de cordon (kg/m).

En particulier, l'évaluation de la performance d'un procédé de soudage peut s'entendre de l'évaluation d'un ou plusieurs des aspects suivants : l'évaluation du réglage des paramètres opératoires de soudage, lesquels paramètres comprenant notamment le régime de transfert de métal, la tension du courant de soudage, l'intensité du courant de soudage, la vitesse de dévidage de fil, l'évaluation de la qualité de la soudure résultante, l'évaluation du montage de soudage, i. e. positionnement des pièces, de la torche de soudage.

Etant entendu que l'invention peut s'appliquer à l'évaluation de la performance de tout procédé de soudage par fusion pouvant produire des projections, tel que le soudage à l'arc ou le soudage laser, avec faisceau laser seul ou combiné à un arc électrique. L'invention peut notamment s'appliquer à un procédé de soudage utilisé pour la fabrication additive par projection de poudre (procédé LMD pour Laser Métal Déposition en anglais) ou par fusion laser sur lit de poudre (procédé SLM pour Sélective Laser Melting en anglais).

Avantageusement, on utilise, en tant que paramètre représentatif de la quantité de projections, surface totale des projections confirmées 21C et/ou la densité de projections définie comme la surface totale des projections confirmées 21C divisée par la surface totale S₂ de l'image initiale 2. L'utilisation d'un paramètre lié à la surface de projection permet une quantification encore plus précise de la quantité de projections produites. En particulier, la densité de projections et/ou la surface totale de projections permet d'évaluer encore plus efficacement des critères d'efficacité de soudage tels le taux de dépôt ou le taux de production du procédé. Ces indicateurs sont aussi révélateurs de la matière perdue dans les projections et qui n'est pas apportée au cordon.

De façon alternative ou complémentaire, on peut utiliser le nombre de projections par unité de surface, qui peut être déterminé comme le nombre de projections confirmées 21C divisé par la surface totale S₂ de l'image initiale 2.

L'utilisation de ces indicateurs conduit à une détermination objective de la performance de soudage, qui peut fournir une indication en absolu, mais aussi en relatif grâce à la comparaison rendue possible des paramètres entre différentes images initiales 2. Ces images initiales 2 peuvent être acquises suite à des soudages réalisés dans un même atelier de soudage ou poste de soudage à des temps différents, sur différents postes de soudage ou dans différents ateliers de soudage. On peut aussi comparer le ou les paramètres représentatifs de la performance déterminés grâce au procédé de l'invention à des valeurs de référence qui peuvent être déterminées par mise en oeuvre du procédé de l'invention sur une image initiale obtenue dans des conditions de soudage optimales.

Le procédé selon l'invention peut en outre mettre en oeuvre au moins un traitement statistique relatif audit au moins un paramètre représentatif de la performance de soudage, notamment un traitement statistique relatif à la surface des projections confirmées comprenant la détermination d'au moins l'une parmi : la surface moyenne des projections, la surface minimale et/ou la surface maximale que présentent les projections, la déviation standard de la surface des projections, au moins une population en nombre de projections ayant une surface supérieure à un seuil bas prédéterminé et/ou inférieure à un seuil haut prédéterminé. La mise en oeuvre d'un traitement statistique permet d'améliorer encore l'efficacité et la précision de détection des projections.

Il est aussi envisageable de définir une ou plusieurs règles de corrélation entre le au moins un paramètre et plusieurs états qualitatifs prédéterminés stockés dans une base de données 10 auxquels on aura attribué au préalable une valeur ou une plage de valeurs du paramètre.

La qualité de la soudure peut être déterminée par une logique électronique 9 apte à recevoir et traiter le paramètre.

De préférence, les premier et deuxième traitements numériques sont réalisés par une unité de traitement électronique 8. Le système de traitement numérique 8 et la logique électronique 9 comprennent chacun au moins l'un parmi : un microcontrôleur, un microprocesseur, un ordinateur, une mémoire. Les dispositifs 8 et 9 peuvent éventuellement être confondus en un même ensemble de traitement numérique configuré pour réaliser les différentes étapes de traitement d'images et de données du procédé selon l'invention.

Avantageusement, le système de traitement numérique 8, la logique électronique 9 et/ou la base de données 10 sont localisés sur un serveur distant 7 auquel le dispositif de prise d'image 3 envoie les images 2 acquises, comme montré sur la figure 1. On peut également mettre en oeuvre les étapes d'apprentissage, de classification et/ou de pré-traitement sur le serveur distant 7

Le fait d'opérer le traitement des images et données collectées à distance du dispositif de prise d'image 3 permet de pouvoir effectuer des traitements d'images et des calculs à partir d'un grand nombre de données collectées, sans que cela ne complexifie ou n'oblige à surdimensionner le dispositif de prise d'image 3 utilisé par l'opérateur.

De préférence, le dispositif de prise d'image 3 échange avec le serveur distant 7 via un réseau de communication de type internet. Le dispositif de prise d'image 3 peut utiliser des protocoles de communication à distance sans fil, par exemple 3G, 4G, Wifi.

Le dispositif de prise d'image 3 comprend avantageusement un système informatique utilisant une application logicielle pour l'acquisition, le traitement et/ou la transmission d'images et de données vers le serveur distant 7. L'application peut être conçue pour fonctionner avec des systèmes informatiques d'appareils mobiles (iOS et Android) ou fixes (Windows et Mac).

Une fois l'information sur la performance de soudage obtenue, celle-ci peut être retransmise à l'opérateur ayant réalisé la soudure et/ou l'acquisition de l'image initiale 2 par transmission du serveur distant 7 vers le dispositif de prise d'image 3. L'information peut aussi être transmise à distance à un autre utilisateur, par exemple un responsable d'atelier de soudage dans lequel les soudures sont réalisées. Les données collectées (images, qualités, paramètres de soudage) peuvent aussi être stockées dans une base de données, éventuellement avec horodatage des données, en vue d'une utilisation ultérieure, par exemple pour effectuer des statistiques, une surveillance de l'évolution temporelle d'au moins un paramètre représentatif de la performance de soudage afin de détecter une éventuelle dérive du paramètre et/ou une analyse prédictive du comportement du poste de soudage fondée sur la surveillance dudit paramètre.

Selon un mode de réalisation particulier, le procédé comprend l'acquisition de plusieurs images initiales 2 à des temps successifs. Lesdites images 2 peuvent par exemple être acquises à des temps séparés d'une durée allant d'un jour jusqu'à une ou plusieurs semaines, voire un ou plusieurs mois, et jusqu'à une année. Une comparaison des valeurs du paramètre représentatif de la quantité de projections confirmées 21C déterminé pour chacune des images initiales 2 est opérée afin de détecter une éventuelle variation dudit paramètre, qui peut être représentative d'une défaillance de l'opérateur et /ou de l'équipement de soudage.

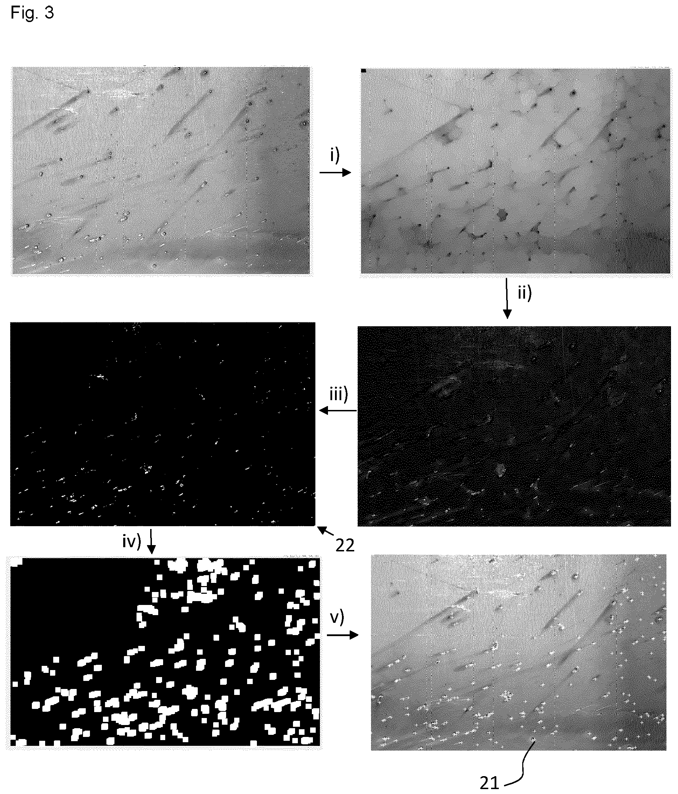

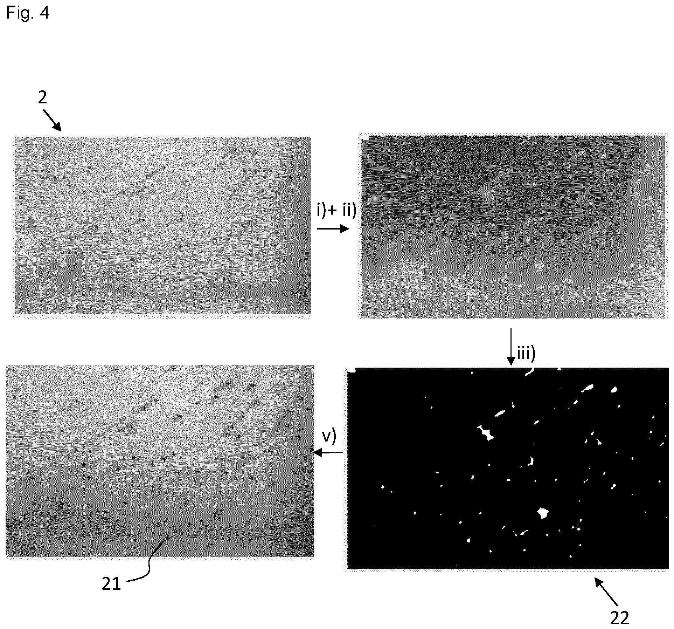

Les figures 3 et 4 illustrent des étapes possibles d'un premier traitement numérique d'image permettant de localiser des projections 21 présumées sur une image 2. Les inventeurs de la présente invention ont mis en évidence des éléments caractéristiques de projections, en particulier une zone apparaissant plus lumineuse que le reste de l'image 2 et située vers le centre de la projection et une zone périphérique de la projection qui apparaît plus sombre à cause de l'oxydation de surface.

Notons que l'image initiale 2 acquise à l'étape a) est de préférence une image en couleur codée avec un format de codage des couleurs du type rouge, vert, bleu (RVB ou RGB en anglais), chaque pixel de l'image 2 ayant 3 composantes de rouge, vert, bleu qui lui est attribuée. De préférence, l'image initiale 2 est convertie en niveaux de gris avant de lui appliquer le premier traitement numérique. L'étape finale du premier traitement numérique est de marquer les projections présumées sur l'image initiale 2. L'image initiale 2 marquée est de préférence au format RVB. Ce marquage est utilisé pour définir les extraits 20 à entrer dans le réseau neuronal 5

La Figure 3 illustre le cas où les projections sont localisées sur l'image 2 par détection d'un centre lumineux. L'image initiale 2 est d'abord filtrée afin d'en extraire et supprimer un arrière-plan. On s'affranchit ainsi des effets parasites qui seraient dus à une illumination non uniforme de la portion de surface. L'image initiale est transformée en image binaire 22 par seuillage. L'image initiale 2 est sous forme de matrice bidimensionnelle de pixels ayant des valeurs d'intensité données. Le seuillage peut s'effectuer en attribuant une même valeur à tous les pixels dont les valeurs sont supérieures ou inférieures à une valeur seuil, et en attribuant une autre valeur aux pixels restants. Après sélection de zones identifiées comme d'intérêt celles-ci sont repérées et marquées sur l'image binaire 2. Ce marquage est transposé sur l'image initiale 2 (croix blanches), ce qui permet ensuite de repérer les extraits de l'image 2 à introduire dans le réseau neuronal 5.

La Figure 4 illustre le cas où les projections sont localisées sur l'image 2 par détection d'une zone sombre. Le premier traitement numérique comprend une étape additionnelle d'inversion des valeurs de pixels de l'image binaire 22. Le marquage des projections présumées 21 est transposé au final sur l'image initiale 2 (croix noires)

Selon un mode particulier de réalisation, on attribue une position à chacune des projections présumées 21 localisées à l'issue du premier traitement numérique, notamment une position définie par des coordonnées bidimensionnelles, et on compare deux à deux chacune desdites positions. Lorsque la distance entre les positions comparées est inférieure à une valeur prédéterminée, typiquement inférieure à 20 pixels dans l'image 2, l'une des deux projections présumées dont les positions ont été comparées est ignorée. Cela permet la suppression des doublons dans le cas où des projections présentent à la fois les caractéristiques de centre lumineux et de zone sombre.

Optionnellement, préalablement à l'étape b), une étape de pré-traitement de l'image initiale 2 est réalisée par application d'au moins un masque configuré pour supprimer de l'image initiale 2 au moins une partie des caractéristiques autres que des projections, par exemple des rayures, des réflexions parasites.

La figure 5 illustre une architecture possible d'un réseau neuronal 5 à convolution recevant en entrée un extrait 20 de taille 41 x 41 x 3 pixels. Notons que la taille 41x41x3 a été choisie car elle correspond à la taille typique d'une projection dans l'image. Le réseau neuronal 5 comprend une première couche de convolution CL1 constituées de 8 filtres de taille 5 x 5 pixels. Cette couche CL1 a pour fonction de calculer la sortie des neurones qui sont connectés à des régions locales dans l'entrée, chacun calculant un produit scalaire entre leurs poids et une région à laquelle ils sont connectés dans le volume d'entrée.

CL1 est suivie d'une première couche de regroupement PL1 de taille 2 x 2 pixels. Elle permet d'effectuer une opération de sous-échantillonnage le long des dimensions spatiales (largeur, hauteur), résultant en un volume tel que 19 x 19 x 8

Suivent deux nouvelles couches de convolution CL2 et CL3 constituées respectivement de 16 filtres de taille 5 x 5 pixels et de 32 filtres de taille 3 x 3 pixels.

Une deuxième couche de regroupement PL2 de taille 2 x 2 pixels est agencée entre CL2 et CL3 pour une opération de sous-échantillonnage. En sortie de CL3, on obtient le volume 8 x 8 x 32, volume qui est reconditionné en une couche de neurones entièrement connectée FCL (pour « fully connected layer » en anglais) de 1 x 1 x 2048 ajoutée à l'architecture et connectée à un étage de décision pour classer les projections présumées. Les couches CL et FCL effectuent des transformations qui sont fonction non seulement des activations du volume d'entrée, mais aussi des paramètres (les poids et les biais des neurones).

Notons que de préférence, à l'étape c), le réseau neuronal 5 opère successivement sur une série d'extraits 20 de l'image initiale 2 ayant chacun pour dimensions N × M × 3 pixels, où M et N sont des nombres entiers compris entre 32 et 224, de préférence entre 32 et 60. Les dimensions des extraits sont choisies en fonction des dimensions des projections, de préférence de sorte qu'il n'y ait qu'une projection se trouvant dans l'extrait 20. Les termes « x 3 » correspond aux 3 couleurs élémentaires rouge, vert et bleu et indique que l'extrait 20 a un format de codage du type RVB, chaque pixel ayant 3 composantes de rouge, vert, bleu qui lui sont attribuées.

Afin de démontrer l'efficacité de la détection des projections utilisée dans le procédé selon l'invention, on a réalisé différentes opérations de soudage sur différents matériaux, dans différentes configurations de joints de soudage, avec différents gaz de protection (voir tableau 1) et différents paramètres opératoires. Les résultats obtenus sont donnés dans les tableaux 2 et 3 ci-dessous.

La distribution du nombre de projections indique la distribution de la population des projections confirmées en fonction de leur surface individuelle S₂₁. S₂₁ₜₒₜ est la surface totale des projections confirmées calculée à l'étape d) du procédé. S₂ est la surface totale réelle de l'image initiale 2 acquise. La précision de détection est définie comme le rapport entre le nombre de projections confirmées et le nombre réel de projections trouvées à la surface des pièces soudées.

Notons que dans le tableau 2, essai n° 3, la moins bonne précision résulte d'une saturation de l'image 2 à cause d'une réflexion de l'éclairage, ce que l'opérateur peut aisément éviter.

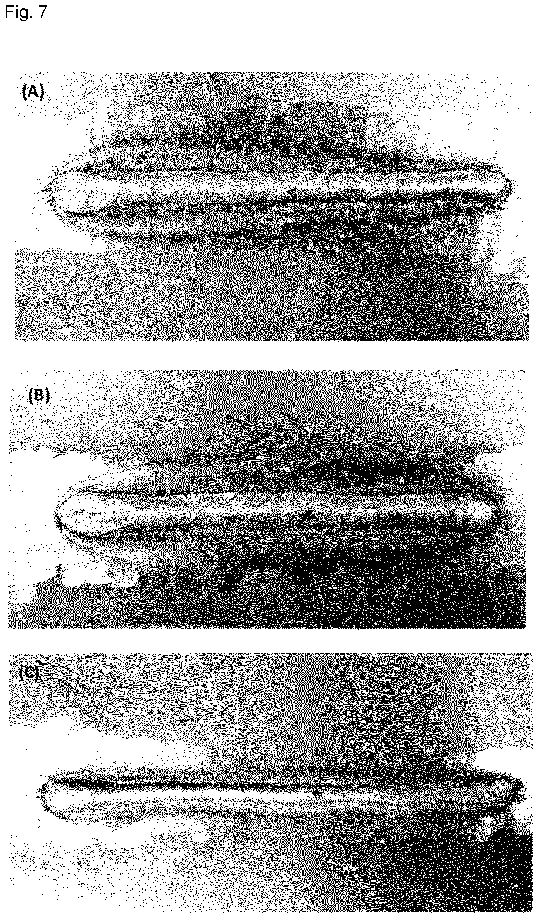

On constate par exemple qu'en l'absence de gaz de protection (tableau 2, essai n°4), la soudure peut être qualifiée de mauvaise au vu de la surface totale et de la densité de projections qui augmente significativement par rapport aux autres essais. On constate également que les régimes de transfert globulaire et de court-circuit génèrent plus de projections que le régime de pulvérisation axiale (tableau 3). La figure 7 montre des images de soudures sur des pièces de dimensions 76 x 152 mm et d'épaisseur 6 mm en régime globulaire (A), de pulvérisation (B) et en court-circuit (C). Les projections confirmées sont marquées par des croix sur les images initiales 2 acquises.

**Tableau 1**

| N° | Matériau | Types de joint | Gaz de protection |
|---|---|---|---|
| 1 | Acier au carbone 836 | Bord à bord | ARCAL^{™} Force (Ar +18 % CO2 |
| 2 | Acier au carbone 836 | Recouvrement | ARCAL^{™} Force (Ar +18 % CO2 |
| 3 | Acier au carbone 836 | Angle, 90° | ARCAL^{™} Force (Ar +18 % CO2 |
| 4 | Acier inoxydable 316L | Bord à bord | Sans gaz |
| 5 | Acier inoxydable 316L | Bord à bord | ARCAL^{™} Chrome (Ar +2 % CO2 |

**Tableau 2**

| N° | Distribution du nombre de projections | | | | S2 (mm²) | Précision de détection | S₂₁ₜₒₜ (mm²) | Densité (S_{21tot/}S₂) |
|---|---|---|---|---|---|---|---|---|
| | <0.5 mm² | Entre 0.5 et 1 mm² | Entre 1 et 3 mm² | >3 mm² | | | | |
| 1 | 191 | 6 | 6 | 3 | 18225.5 | 98% | 42.7 | 0.0023 |
| 2 | 20 | 1 | 0 | 0 | 8021.25 | 90% | 1.633 | 2.036e-4 |
| 3 | 95 | 2 | 1 | 0 | 5791.5 | 88% | 19.2 | 0.0033 |
| 4 | 238 | 22 | 29 | 10 | 22021.87 | 98% | 138.94 | 0.0063 |
| 5 | 23 | 1 | 3 | 0 | 8565.75 | 95% | 6.4 | 7.472 e-4 |

**Tableau 3**

| N° | Régime de transfert | Tension (V) | Vitesse fil (pouces/ min) | Distribution du nombre de projections | | | | S₂₁ₜₒₜ (mm²) | Densité (S₂₁ₜₒₜ/S₂) |
|---|---|---|---|---|---|---|---|---|---|
| | | | | <0.5 mm² | Entre 0.5 et 1 mm² | Entre 1 et 3 mm² | >3 mm² | | |
| 1 | Globulaire | 29 | 380 | 359 | 10 | 12 | 4 | 66.6 | 0.0057 |
| 2 | Pulvérisation | 25.5 | 380 | 260 | 5 | 10 | 0 | 37.3 | 0.0032 |
| 3 | Court-circuit | 19.5 | 380 | 372 | 7 | 7 | 1 | 42 | 0.0036 |

Le procédé selon l'invention peut être mis en oeuvre après tout procédé de soudage pour évaluer la qualité de soudure, en particulier après un soudage MIG, MAG, laser ou hybride laser-arc. Dans le cadre de l'invention, les pièces métalliques peuvent être soudées en étant positionnées selon différentes configurations, notamment en bord à bord ou bien en angle, c'est-à-dire inclinée l'une par rapport à l'autre de manière à ce que les surfaces supérieures des pièces à souder forment entre elles un angle, en recouvrement et avec tout type de préparation des bords (soyés, droits, chanfreinés,..).

## Revendications

1. Procédé de détermination de la performance d'un procédé de soudage réalisé sur au moins une pièce métallique, notamment un procédé de soudage à l'arc électrique ou de soudage laser, ledit procédé comprenant les étapes suivantes :
a) acquisition par un dispositif de prise d'image (3) d'au moins une image initiale (2) d'au moins une portion de surface de ladite pièce, où cette étape est réalisée sur ladite pièce préalablement soudée comprenant un cordon de soudure (1), une fois le soudage de ladite pièce terminé, des projections confirmées (21C) se trouvant sur la surface de ladite pièce,
b) réalisation d'un premier traitement numérique sur l'image initiale (2) de manière à localiser, dans ladite image initiale (2), les projections présumées (21),
**caractérisé en ce qu'**il comprend en outre les étapes suivantes :
c) introduction (100) d'un ou plusieurs extraits (20) de l'image initiale (2) comprenant chacun une projection présumée (21), en entrée d'au moins un réseau neuronal (5), en particulier un réseau neuronal à convolution, de façon à classer (200) les projections présumées en projections confirmées (21C) ou non-confirmées,
d) réalisation d'un deuxième traitement numérique (300) sur l'image initiale (2) comprenant les projections (21C) classées confirmées à l'étape c) de manière à déterminer au moins un paramètre représentatif de la quantité de projections confirmées (21C) choisi parmi :
- la surface d'une ou plusieurs projections confirmées (21C),
- la surface totale des projections confirmées (21C), définie comme la somme de la surface de chaque projection confirmée (21C),
- le nombre de projections confirmées (21C),
- le nombre de projections confirmées (21C) par unité de surface,
- la densité de projections, définie comme la surface totale des projections confirmées (21C) divisée par la surface totale (S₂) de l'image initiale (2),
- la moyenne des distances entre chaque projection confirmée (21C) et le cordon de soudure (1),
e) détermination de la performance du procédé de soudage à partir du au moins un paramètre déterminé à l'étape d).

2. Procédé selon la revendication 1, **caractérisé en ce que** le dispositif de prise d'image (3) est agencé dans un système informatique choisi parmi : un téléphone intelligent, une tablette, un ordinateur portable.

3. Procédé selon l'une des revendications 1 ou 2, **caractérisé en ce qu'**il comprend, préalablement à l'étape a), une étape de calibration du dispositif de prise d'image (3) comprenant l'acquisition de plusieurs images d'un même motif bidimensionnel (6) avec le dispositif de prise d'image (3) positionné pour chaque image à une distance prédéterminée distincte du motif bidimensionnel (6), ledit motif (6) étant ensuite positionné sur ladite au moins une portion de surface de la pièce de façon à être inclus dans l'image initiale (2) acquise à l'étape a).

4. Procédé selon l'une des revendications précédentes, caractérisé en qu'il met en oeuvre au moins un traitement statistique relatif audit au moins un paramètre représentatif de la quantité de projections confirmées (21C), notamment un traitement statistique relatif à la surface des projections confirmées (21C) comprenant la détermination d'au moins l'une parmi : la surface moyenne des projections confirmées (21C), la surface minimale et/ou la surface maximale des projections confirmées (21C), la déviation standard de la surface des projections confirmées (21C), au moins une population en nombre de projections confirmées (21C) ayant une surface supérieure à un seuil bas prédéterminé et/ou inférieure à un seuil haut prédéterminé.

5. Procédé selon l'une des revendications précédentes, **caractérisé en ce qu'**on acquiert plusieurs images initiales (2) à des temps successifs et on compare les valeurs du paramètre représentatif de la quantité de projections confirmées (21C) déterminé pour chacune des images initiales (2) afin de détecter une éventuelle variation dudit paramètre.

6. Procédé selon l'une des revendications précédentes, **caractérisé en ce que** ladite au moins une image initiale (2) est acquise avec le dispositif de prise d'image (3) positionné à une distance comprise entre 10 et 40 cm, de préférence entre 20 et 30 cm, au-dessus de la soudure (1).

7. Procédé selon l'une des revendications précédentes, **caractérisé en ce que** le premier traitement numérique réalisé à l'étape b) sur l'image initiale (2) comprend les sous-étapes suivantes :
i) filtrage de l'image initiale (2) de façon à opérer une différenciation entre les projections métalliques (4) et un arrière-plan de l'image initiale (2),
ii) suppression de l'arrière-plan de l'image initiale (2),
iii) binarisation de l'image filtrée issue de l'étape i), notamment par seuillage basé sur l'intensité, de façon à former une image binaire (22) à deux valeurs de pixels, avec, optionnellement, inversion des valeurs des pixels de l'image binaire (22),
iv) sélection d'une des deux valeurs de pixels de façon à définir dans l'image binaire des zones d'intérêt formées par les pixels de la valeur sélectionnée, avec, optionnellement, dilatation desdites zones d'intérêt,
v) marquage des zones d'intérêt sur l'image binaire et transposition dudit marquage sur l'image initiale (2) de façon à y localiser des projections présumées (21).

8. Procédé selon l'une des revendications précédentes, **caractérisé en ce que** préalablement à l'étape c), on attribue une position à chacune des projections présumées (21) localisées à l'étape b), notamment une position définie par des coordonnées bidimensionnelles, et on compare deux à deux chacune desdites positions, une des deux projections présumées étant ignorée lorsque la distance entre les positions comparées est inférieure à une valeur prédéterminée.

9. Procédé selon l'une des revendications précédentes, **caractérisé en ce qu'**à l'étape c), le réseau neuronal (5) comporte plusieurs couches de convolution, de préférence trois couches de convolution (CL1, CL2, CL3), au moins une couche entièrement connectée (FCL) et au moins une couche de regroupement (PL1, PL2), de préférence une couche de regroupement (PL1, PL2) est intercalée entre deux couches de convolution.

10. Procédé selon l'une des revendications précédentes, **caractérisé en ce qu'**à l'étape c), les projections présumées sont classées en projections confirmées ou non-confirmées selon des critères de décision définis par un apprentissage préalable du réseau neuronal (5), ledit apprentissage étant réalisé au moyen d'un ensemble d'images d'apprentissage (20A) comprenant plusieurs sous-ensembles choisis parmi : un sous-ensemble d'images d'apprentissage comprenant chacune au moins une projection métallique, un sous-ensemble d'images d'apprentissage exemptes de projections métalliques, un sous-ensemble d'images d'apprentissage comprenant chacune au moins un défaut autre qu'une projection tel une rayure, une réflexion parasite, un sous-ensemble d'images d'apprentissage comprenant chacune au moins une portion de soudure, lesdits sous-ensembles comprenant de préférence chacun au moins 1000 images d'apprentissage, de préférence encore au moins 2000 images d'apprentissage.

11. Procédé selon la revendication 10, **caractérisé en ce qu'**à l'étape c), on associe aux extraits (20) de l'image initiale (2) en entrée du réseau neuronal (5) au moins une information de contexte choisie parmi : le matériau de la pièce métallique, le gaz de soudage, la configuration de joint soudé, le régime de transfert de métal, la tension du courant de soudage, l'intensité du courant de soudage, la vitesse de dévidage de fil.

12. Procédé selon l'une des revendications précédentes, **caractérisé en ce qu'**il comprend, préalablement à l'étape b), une étape de pré-traitement de l'image initiale (2) par application d'au moins un masque configuré pour supprimer de l'image initiale (2) des caractéristiques autres que des projections, par exemple des rayures, des réflexions parasites.

13. Procédé selon l'une des revendications précédentes, **caractérisé en ce qu'**il comprend une étape de transmission à distance de l'image initiale (2) via un réseau de communication, de préférence un réseau de type Internet, du dispositif de prise d'image (3) vers un serveur distant (7), les étapes b) à e) étant réalisée par un système électronique de traitement localisée dans le serveur distant.

14. Dispositif de détermination de la performance d'un procédé de soudage configuré, ledit dispositif comprenant :
- un dispositif de prise d'image (3) configuré pour acquérir ladite image initiale (2),
- une mémoire pour le stockage de l'image initiale (2),
ledit dispositif étant **caractérisé en ce qu'**il comprend :
- un système de traitement électronique (8) ayant accès à ladite mémoire, ledit système de traitement électronique étant configuré pour réaliser le premier traitement numérique et le deuxième traitement numérique sur l'image initiale (2),
- au moins un réseau neuronal (5), en particulier un réseau neuronal à convolution, configuré pour recevoir en entrée des extraits (20) de l'image initiale (2) et classer des projections présumées en projections confirmées (21C) ou non-confirmées,
- une logique électronique (9) configurée pour déterminer la performance du procédé de soudage à partir du au moins un paramètre représentatif de la quantité de projections déterminé par le deuxième traitement numérique, le dispositif de détermination de la performance d'un procédé de soudage étant configuré pour exécuter les étapes de la méthode selon l'une de revendications 1 à 13.

15. Produit programme d'ordinateur téléchargeable depuis un réseau de communication et/ou enregistré sur un support lisible par ordinateur et/ou exécutable par un processeur, comprenant des instructions de code de programme qui conduisent l'appareil selon la revendication 14 à exécuter les étapes de la méthode selon l'une des revendications 1 à 13.

## Patentansprüche

1. Verfahren zur Bestimmung der Leistung eines Schweißverfahrens, das an mindestens einem metallischen Werkstück ausgeführt wird, insbesondere eines Lichtbogen- oder Laserschweißverfahrens, wobei das Verfahren die folgenden Schritte umfasst:
a) Erfassen, durch eine Bildaufnahmevorrichtung (3), mindestens eines Ausgangsbilds (2) mindestens eines Flächenabschnitts des Werkstücks, wobei dieser Schritt an dem zuvor geschweißten Werkstück ausgeführt wird, das eine Schweißnaht (1) umfasst, sobald das Schweißen des Werkstücks beendet ist, wobei sich bestätigte Spritzer (21C) auf der Fläche des Werkstücks befinden,
b) Ausführen einer ersten digitalen Verarbeitung an dem Ausgangsbild (2), so dass in dem Ausgangsbild (2) die mutmaßlichen Spritzer (21) lokalisiert werden,
**dadurch gekennzeichnet, dass** es ferner die folgenden Schritte umfasst:
c) Eingeben (100) eines oder mehrerer Ausschnitte (20) des Ausgangsbilds (2), die jeweils einen mutmaßlichen Spritzer (21) umfassen, im Eingang mindestens einen neuronalen Netzes (5), insbesondere eines faltenden neuronalen Netzes, so dass die mutmaßlichen Spritzer in bestätigte Spritzer (21C) oder unbestätigte klassifiziert (200) werden,
d) Ausführen einer zweiten digitalen Verarbeitung (300) an dem Ausgangsbild (2), das die im Schritt c) klassifizierten bestätigten Spitzer (21C) umfasst, so dass mindestens ein für die Menge bestätigter Spritzer (21C) repräsentativer Parameter bestimmt wird, der ausgewählt ist aus:
- der Fläche eines oder mehrerer bestätigter Spritzer (21C),
- der Gesamtfläche der bestätigten Spritzer (21C), die als die Summe der Fläche jedes bestätigten Spritzers (21C) definiert ist,
- der Anzahl bestätigter Spritzer (21C),
- der Anzahl bestätigter Spritzer (21C) je Flächeneinheit,
- der Spritzerdichte, die als die Gesamtfläche der bestätigten Spritzer (21C) dividiert durch die Gesamtfläche (S₂) des Ausgangsbilds (2) definiert ist,
- dem Mittelwert der Abstände zwischen jedem bestätigten Spritzer (21C) und der Schweißnaht (1),
e) Bestimmen der Leistung des Schweißverfahrens ausgehend von dem mindestens einen im Schritt d) bestimmten Parameter.

2. Verfahren nach Anspruch 1, **dadurch gekennzeichnet, dass** die Bildaufnahmevorrichtung (3) in einem Computersystem angeordnet ist, das ausgewählt ist aus: einem Smartphone, einem Tablet, einem Laptop.

3. Verfahren nach einem der Ansprüche 1 oder 2, **dadurch gekennzeichnet, dass** es vor dem Schritt a) einen Schritt des Kalibrierens der Bildaufnahmevorrichtung (3) umfasst, der das Erfassen von mehreren Bildern eines selben zweidimensionalen Musters (6) mit der Bildaufnahmevorrichtung (3) umfasst, die für jedes Bild in einem unterschiedlichen vorbestimmten Abstand von dem zweidimensionalen Muster (6) positioniert wird, wobei das Muster (6) anschließend auf dem mindestens einen Flächenabschnitt des Werkstücks positioniert wird, so dass es in dem im Schritt a) erfassten Ausgangsbild (2) enthalten ist.

4. Verfahren nach einem der vorhergehenden Ansprüche, **dadurch gekennzeichnet, dass** es mindestens eine statistische Verarbeitung bezüglich des mindestens einen für die Menge bestätigter Spritzer (21C) repräsentativen Parameters einsetzt, insbesondere eine statistische Verarbeitung bezüglich der Fläche der bestätigen Spritzer (21C), die das Bestimmen von mindestens einer umfasst unter: der mittleren Fläche der bestätigten Spritzer (21C), der minimalen Fläche und/oder der maximalen Fläche der bestätigten Spritzer (21C), der Standardabweichung der Fläche der bestätigten Spritzer (21C), mindestens einer zahlenmäßigen Grundgesamtheit bestätigter Spritzer (21C), die eine Fläche haben, die größer als ein vorbestimmter unterer Schwellenwert und/oder kleiner als ein vorbestimmter oberer Schwellenwert ist.

5. Verfahren nach einem der vorhergehenden Ansprüche, **dadurch gekennzeichnet, dass** man mehrere Ausgangsbilder (2) zu aufeinander folgenden Zeiten erfasst und man die Werte des für die Menge bestätigter Spritzer (21C) repräsentativen Parameters vergleicht, der für jedes der Ausgangsbilder (2) bestimmt wird, um eine etwaige Änderung des Parameters zu detektieren.

6. Verfahren nach einem der vorhergehenden Ansprüche, **dadurch gekennzeichnet, dass** das mindestens eine Ausgangsbild (2) mit der Bildaufnahmevorrichtung (3) erfasst wird, die in einem Abstand zwischen 10 und 40 cm, bevorzugt zwischen 20 und 30 cm, über der Schweißung (1) positioniert wird.

7. Verfahren nach einem der vorhergehenden Ansprüche, **dadurch gekennzeichnet, dass** die erste digitale Verarbeitung, die im Schritt b) an dem Ausgangsbild (2) ausgeführt wird, die folgenden Teilschritte umfasst:
i) Filtern des Ausgangsbilds (2), so dass eine Differenzierung zwischen den metallischen Spritzern (4) und einem Hintergrund des Ausgangsbilds (2) vorgenommen wird,
ii) Löschen des Hintergrunds des Ausgangsbilds (2),
iii) Binarisieren des aus dem Schritt i) hervorgegangenen gefilterten Bilds, insbesondere durch auf der Helligkeit beruhende Schwellenbildung, so dass ein Binärbild (22) mit zwei Pixelwerten gebildet wird, mit, optional, Inversion der Werte der Pixel des Binärbilds (22),
iv) Wählen eines der beiden Pixelwerte, so dass in dem Binärbild Bereiche von Interesse definiert werden, die durch die Pixel mit dem gewählten Wert gebildet werden, mit, optional, Dilatation der Bereiche von Interesse,
v) Markieren der Bereiche von Interesse auf dem Binärbild und Übertragen der Markierung auf das Ausgangsbild (2), so dass darin mutmaßliche Spritzer (21) lokalisiert werden.

8. Verfahren nach einem der vorhergehenden Ansprüche, **dadurch gekennzeichnet, dass** man vor dem Schritt c) jedem der im Schritt b) lokalisierten mutmaßlichen Spritzer (21) eine Position zuweist, insbesondere eine durch zweidimensionale Koordinaten definierte Position, und man paarweise jede der Positionen vergleicht, wobei einer der beiden mutmaßlichen Spritzer außer Acht gelassen wird, wenn der Abstand zwischen den verglichenen Positionen kleiner als ein vorbestimmter Wert ist.

9. Verfahren nach einem der vorhergehenden Ansprüche, **dadurch gekennzeichnet, dass** im Schritt c) das neuronale Netz (5) mehrere Faltungsschichten, bevorzugt drei Faltungsschichten (CL1, CL2, CL3), mindestens eine vollständig verbundene Schicht (FCL) und mindestens eine Pooling-Schicht (PL1, PL2) aufweist, bevorzugt eine Pooling-Schicht (PL1, PL2) zwischen zwei Faltungsschichten liegt.

10. Verfahren nach einem der vorhergehenden Ansprüche, **dadurch gekennzeichnet, dass** im Schritt c) die mutmaßlichen Spritzer nach Entscheidungskriterien in bestätigte oder unbestätigte Spritzer klassifiziert werden, die durch ein vorheriges Einlernen des neuronalen Netzes (5) definiert werden, wobei das Einlernen mittels einer Menge von Einlernbildern (20A) ausgeführt wird, die mehrere Teilmengen umfassen, die ausgewählt sind aus: einer Teilmenge von Einlernbildern, die jeweils mindestens einen metallischen Spritzer umfassen, einer Teilmenge von Einlernbildern, die frei von metallischen Spritzern sind, einer Teilmenge von Einlernbildern, die jeweils mindestens einen anderen Fehler als einen Spritzer wie eine Riefe, eine Störreflexion umfassen, einer Teilmenge von Einlernbildern, die jeweils mindestens einen Schweißabschnitt umfassen, wobei die Teilmengen bevorzugt jeweils mindestens 1000 Einlernbilder, noch bevorzugter mindestens 2000 Einlernbilder umfassen.

11. Verfahren nach Anspruch 10, **dadurch gekennzeichnet, dass** man im Schritt c) den Ausschnitten (20) des Ausgangsbilds (2) im Eingang des neuronalen Netzes (5) mindestens eine Kontextinformation zuordnet, die ausgewählt ist aus: dem Werkstoff des metallischen Werkstücks, dem Schweißgas, der Schweißverbindungsausgestaltung, der Metallübertragungsart, der Spannung des Schweißstroms, der Stärke des Schweißstroms, der Drahtabspulgeschwindigkeit.

12. Verfahren nach einem der vorhergehenden Ansprüche, **dadurch gekennzeichnet, dass** es vor dem Schritt b) einen Schritt der Vorverarbeitung des Ausgangsbilds (2) durch Anwenden mindestens einer Maske umfasst, die dazu ausgestaltet ist, aus dem Ausgangsbild (2) andere Merkmale als Spritzer, zum Beispiel Riefen, Störreflexionen, zu löschen.

13. Verfahren nach einem der vorhergehenden Ansprüche, **dadurch gekennzeichnet, dass** es einen Schritt des Fernübertragens des Ausgangsbilds (2) über ein Kommunikationsnetz, bevorzugt ein Netz vom Typ Internet, von der Bildaufnahmevorrichtung (3) zu einem entfernten Server (7) umfasst, wobei die Schritte b) bis e) von einem elektronischen Verarbeitungssystem ausgeführt werden, das in dem entfernten Server lokalisiert ist.

14. Vorrichtung zur Bestimmung der Leistung eines Schweißverfahrens, wobei die Vorrichtung umfasst:
- eine Bildaufnahmevorrichtung (3), die dazu ausgestaltet ist, das Ausgangsbild (2) zu erfassen,
- einen Speicher zum Speichern des Ausgangsbilds (2), wobei die Vorrichtung **dadurch gekennzeichnet ist, dass** sie umfasst:
- ein elektronisches Verarbeitungssystem (8), das Zugriff auf den Speicher hat, wobei das elektronische Verarbeitungssystem dazu ausgestaltet ist, die erste digitale Verarbeitung und die zweite digitale Verarbeitung an dem Ausgangsbild (2) auszuführen,
- mindestens ein neuronales Netz (5), insbesondere ein faltendes neuronales Netz, das dazu ausgestaltet ist, im Eingang Ausschnitte (20) des Ausgangsbilds (2) zu empfangen und mutmaßliche Spritzer in bestätigte Spritzer (21C) oder unbestätigte zu klassifizieren,
- eine elektronische Logik (9), die dazu ausgestaltet ist, die Leistung des Schweißverfahrens ausgehend von dem mindestens einen für die Menge von Spritzern repräsentativen Parameter zu bestimmen, der durch die zweite digitale Verarbeitung bestimmt wird, wobei die Vorrichtung zur Bestimmung der Leistung eines Schweißverfahrens dazu ausgestaltet ist, die Schritte des Verfahrens nach einem der Ansprüche 1 bis 13 auszuführen.

15. Computerprogrammprodukt, das von einem Kommunikationsnetz herunterladbar ist und/oder auf einem computerlesbaren Medium gespeichert ist und/oder von einem Prozessor ausführbar ist, umfassend Programmcodeanweisungen, die die Vorrichtung nach Anspruch 14 veranlassen, die Schritte des Verfahrens nach einem der Ansprüche 1 bis 13 auszuführen.

## Claims

1. Method for determining the performance of a welding process carried out on at least one metal part, especially an electric arc-welding or laser-welding process, said method comprising the following steps:
a) acquiring, with an image-capturing device (3), at least one initial image (2) of at least one surface segment of said part, this step being carried out on said part previously welded comprising a weld bead (1), once welding of said part has finished, confirmed spatters (21C) being located on the surface of said part,
b) carrying out a first digital processing operation on the initial image (2) so as to locate, in said initial image (2), the presumed spatters (21),
**characterized in that** it further comprises the following steps:
c) inputting (100) one or more extracts (20) from the initial image (2), each comprising one presumed spatter (21), into at least one neural network (5), in particular a convolutional neural network, so as to classify (200) the presumed spatters into confirmed spatters (21C) or unconfirmed spatters,
d) carrying out a second digital processing operation (300) on the initial image (2) comprising the spatters (21C) classified confirmed in step c) so as to determine at least one parameter representative of the quantity of confirmed spatters (21C) chosen from:
- the area of one or more confirmed spatters (21C),
- the total area of the confirmed spatters (21C), which is defined as the sum of the areas of each confirmed spatter (21C),
- the number of confirmed spatters (21C),
- the number of confirmed spatters (21C) per unit area,
- the spatter density, defined as the total area of confirmed spatters (21C) divided by the total area (S₂) of the initial image (2),
- the average of the distances between each confirmed spatter (21C) and the weld bead (1),
e) determining the performance of the welding process on the basis of the at least one parameter determined in step d).

2. Method according to Claim 1, **characterized in that** the image-capturing device (3) is arranged in an information-technology system chosen from: a smartphone, a tablet, a laptop computer.

3. Method according to either of Claims 1 and 2, **characterized in that** it comprises, previously to step a), a step of calibrating the image-capturing device (3) comprising acquiring a plurality of images of the same two-dimensional pattern (6) with the image-capturing device (3) positioned, for each image, at a different predetermined distance from the two-dimensional pattern (6), said pattern (6) then being positioned on said at least one surface segment of the part so as to be included in the initial image (2) acquired in step a).

4. Method according to one of the preceding claims, **characterized in that** it implements at least one statistical processing operation relating to said at least one parameter representative of the quantity of confirmed spatters (21C), especially a statistical processing operation relating to the area of the confirmed spatters (21C) comprising determining at least one from among: the average area of the confirmed spatters (21C), the minimum area and/or the maximum area of the confirmed spatters (21C), the standard deviation of the area of the confirmed spatters (21C), at least one population by number of confirmed spatters (21C) having an area greater than a predetermined low threshold and/or less than a predetermined high threshold.

5. Method according to one of the preceding claims, **characterized in that** a plurality of initial images (2) are acquired at successive times and the values of the parameter representative of the quantity of confirmed spatters (21C) that is determined for each of the initial images (2) are compared in order to detect any variation in said parameter.

6. Method according to one of the preceding claims, **characterized in that** said at least one initial image (2) is acquired with the image-capturing device (3) positioned at a distance comprised between 10 and 40 cm, preferably between 20 and 30 cm, above the weld (1).

7. Method according to one of the preceding claims, **characterized in that** the first digital processing operation carried out in step b) on the initial image (2) comprises the following sub-steps:
i) filtering the initial image (2) so as to obtain a differentiation between the metal spatters (4) and a background of the initial image (2),
ii) removing the background of the initial image (2),
iii) binarizing the filtered image resulting from step i), especially via brightness-based thresholding, so as to form a binary image (22) with two pixel values, with, optionally, inversion of the values of the pixels of the binary image (22),
iv) selecting one of the two pixel values so as to define, in the binary image, regions of interest formed by the pixels of the selected value, with, optionally, enlargement of said regions of interest,
v) marking the regions of interest in the binary image and transposing the resultant markings to the initial image (2) so as to locate presumed spatters (21) therein.

8. Method according to one of the preceding claims, **characterized in that**, previously to step c), a position is assigned to each of the presumed spatters (21) located in step b), especially a position defined by two-dimensional coordinates, and said positions are each compared two by two, one of the two presumed spatters being ignored when the distance between the compared positions is smaller than a predetermined value.

9. Method according to one of the preceding claims, **characterized in that**, in step c), the neural network (5) comprises a plurality of convolutional layers, preferably three convolutional layers (CL1, CL2, CL3), at least one fully connected layer (FCL) and at least one pooling layer (PL1, PL2), a pooling layer (PL1, PL2) preferably being sandwiched between two convolutional layers.

10. Method according to one of the preceding claims, **characterized in that**, in step c), the presumed spatters are classified into confirmed or unconfirmed spatters according to decision criteria defined via previous training of the neural network (5), said training being carried out by means of a set of training images (20A) comprising a plurality of sub-sets chosen from: a sub-set of training images each comprising at least one metal spatter, a sub-set of training images free of metal spatters, a sub-set of training images each comprising at least one defect, such as a scratch or a parasitic reflection, other than a spatter, a sub-set of training images each comprising at least one weld segment, said sub-sets each preferably comprising at least 1000 training images, more preferably at least 2000 training images.

11. Method according to Claim 10, **characterized in that**, in step c), the extracts (20) from the initial image (2) that are input into the neural network (5) are associated with at least one piece of context information chosen from: the material of the metal part, the welding gas, the weld joint configuration, the metal transfer regime, the welding current voltage, the welding current amperage, the wire feed speed.

12. Method according to one of the preceding claims, **characterized in that** it comprises, previously to step b), a step of pre-processing the initial image (2) by applying at least one mask configured to remove from the initial image (2) features, for example scratches and/or parasitic reflections, other than spatters.

13. Method according to one of the preceding claims, **characterized in that** it comprises a step of remotely transmitting the initial image (2) via a communication network, preferably the Internet, from the image-capturing device (3) to a remote server (7), steps b) to e) being carried out by an electronic processing system located in the remote server.

14. Device for determining the performance of a welding process, said device comprising:
- an image-capturing device (3) configured to acquire said initial image (2),
- a memory for storing the initial image (2),
said device being **characterized in that** it comprises:
- an electronic processing system (8) having access to said memory, said electronic processing system being configured to carry out the first digital processing operation and the second digital processing operation on the initial image (2),
- at least one neural network (5), in particular a convolutional neural network, configured to receive as input extracts (20) from the initial image (2) and to classify presumed spatters into confirmed spatters (21C) or unconfirmed spatters,
- an electronic logic circuit (9) configured to determine the performance of the welding process on the basis of the at least one parameter representative of the quantity of spatters determined by the second digital processing operation, the device for determining the performance of a welding process being configured to execute the steps of the method according to one of Claims 1 to 13.

15. Computer program product downloadable from a communication network and/or stored on a computer-readable and/or processor-executable medium, comprising program-code instructions that cause the device according to Claim 14 to execute the steps of the method according to one of Claims 1 to 13.
